# EUROPÄISCHE PATENTANMELDUNG

(11) **EP 2 443 923 A1**
(43) Veröffentlichungstag der Anmeldung: **25.04.2012**
(21) Anmeldenummer: 10188735.4
(22) Anmeldetag: 25.10.2010
(51) Int. Cl.: A01N 25/04, A01N 25/30

(54) **Zusammensetzung umfassend ein Pestizid und ein Polycarboxylatether**

(71) Anmelder: BASF SE, 67056 Ludwigshafen (DE)
(72) Erfinder: Die Erfindernennung liegt noch nicht vor

(57) **Zusammenfassung**

Gegenstand der vorliegenden Erfindung ist eine Zusammensetzung enthaltend ein Pestizid mit einer Löslichkeit in Wasser von höchstens 10 g/l und ein Polycarboxylatether auf Basis von a) Baugruppen der Formel la und/oder Ib und/oder Ic wie nachstehend definiert und b) Baugruppen der allgemeinen Formel II wie nachstehend definiert. Weiterer Gegenstand ist ein Verfahren zur Herstellung der Zusammensetzung indem man das Pestizid und den Polycarboxylatether in Kontakt bringt. Die Erfindung betrifft weiterhin ein Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt. Ferner betrifft die Erfindung Saatgut enthaltend die Zusammensetzung.

## Beschreibung

Gegenstand der vorliegenden Erfindung ist eine Zusammensetzung enthaltend ein Pestizid mit einer Löslichkeit in Wasser von höchstens 10 g/l und ein Polycarboxylatether auf Basis von a) Baugruppen der Formel la und/oder Ib und/oder Ic wie nachstehend definiert und b) Baugruppen der allgemeinen Formel II wie nachstehend definiert. Weiterer Gegenstand ist ein Verfahren zur Herstellung der Zusammensetzung indem man das Pestizid und den Polycarboxylatether in Kontakt bringt. Die Erfindung betrifft weiterhin ein Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt. Ferner betrifft die Erfindung Saatgut enthaltend die Zusammensetzung. Kombinationen bevorzugter Merkmale mit anderen bevorzugten Merkmalen werden von der vorliegenden Erfindung umfasst.

Agrochemische Formulierungen enthaltend Vinylether sind allgemein bekannt:
WO 2006/000592 offenbart die Verwendung von amphiphilen Polyethergruppen enthaltenden Polymeren als Lösungsvermittler, wobei die Polymere ein hydrophobes Monomer (wie Styrol), ein Allylalkoholalkoxylat, und optional ethylenisch ungesättigte Mono-oder Dicarbonsäuren enthalten.
WO 2009/007328 offenbart die Verwendung von Copolymeren auf Basis von (Meth)Acrylsäure und nichtionischen Monomeren (wie Vinylether) zur Stabilisierung von in Wasser schlecht löslichen Wirkstoffen.
WO 2003/043420 offenbart die Verwendung eines Copolymers auf Basis eines Olefine und/oder eines Vinylethers sowie einer ethylenisch ungesättigten Dicarbonsäure, als Adjuvans bei der Behandlung von Pflanzen.

Nachteilig an den bekannten Polymere ist, dass sich Allylether als Comonomere schlecht einpolymerisieren lassen und hohe Molmassen der Polymere schwer zu erreichen sind.

Aufgabe der Erfindung war eine Möglichkeit zu finden um mit geringeren Mengen Dispergiermittel bereits eine hohe Dispersionsstabiliät erreicht werden kann. Dies gilt insbesondere bei Formulierungen, die hohe Konzentrationen von Pestizid enthalten. Die Dispergiermittel sollten auch hochkonzentrierte Festformulierungen nach Verdünnung mit Wasser stabilisieren. Bei Suspensionen (v.a. Suspensionskonzentraten) soll durch geringe Mengen Zusatz von Dispergiermittel die Serumbildung verringert, und die Lagerstabilität erhöht werden. Außerdem sollten die Dispergiermittel leicht zugänglich sein. Weitere Aufgabe war, dass das Dispergiermittel auch bei der Beizung von Saatgut mit Pestiziden benutzt werden kann, beispielsweise um eine hohe Beladung der Beize mit Wirkstoff zu erreichen.

Die Aufgabe wurde gelöst durch eine Zusammensetzung enthaltend ein Pestizid mit einer Löslichkeit in Wasser von höchstens 10 g/l und ein Polycarboxylatether auf Basis von a) Baugruppen der Formel la und/oder Ib und/oder Ic wie nachstehend definiert und b) Baugruppen der allgemeinen Formel II wie nachstehend definiert.

Geeignete Polycarboxylatether (im folgenden auch "PCE") sind Polymere auf Basis von
a) Baugruppen der Formel la und/oder Ib und/oder Ic 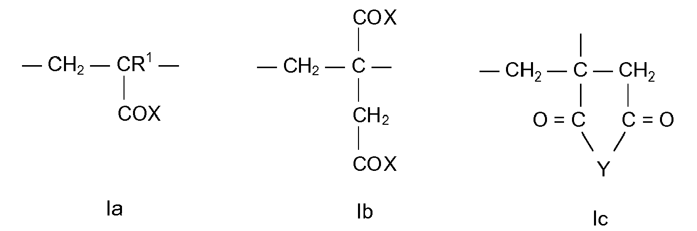 wobei
   - R¹ =: Wasserstoff oder ein aliphatischer Kohlenwasserstoffrest mit 1 bis 20 C-Atomen,
   - X =: -OMa, -O-(CmH2mO)n-R², -NH-(CₘH₂ₘO)ₙR^{2,}
   - M =: Wasserstoff, ein ein- oder zweiwertiges Metallkation, Ammoniumion, ein organischer Aminrest,
   - a =: ½ oder 1,
   - R² =: Wasserstoff, ein aliphatischer Kohlenwasserstoffrest mit 1 bis 20 C-Atomen, ein cycloaliphatischer Kohlenwasserstoffrest mit 5 bis 8 C-Atomen, ein ggf. substituierter Arylrest mit 6 bis 14 C-Atomen,
   - Y =: O, NR²,
   - m =: 2 bis 4, und
   - n =: 0 bis 200
   bedeuten, und
b) Baugruppen der allgemeinen Formel II 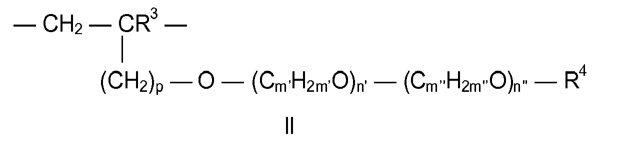 wobei
   - R³ =: Wasserstoff oder einen aliphatischen Kohlenwasserstoffrest mit 1 bis 5 C-Atomen,
   - n',n" =: unabhängig voneinander 0 bis 200,
   - m',m" =: unabhängig voneinander 2 bis 4,
   - n' + n" =: 1 bis 200,
   - p =: 0 bis 3, bedeuten und
   - R⁴ =: Wasserstoff, ein aliphatischer Kohlenwasserstoffrest mit 1 bis 20 C-Atomen, ein cycloaliphatischer Kohlenwasserstoffrest mit 5 bis 8 C-Atomen, ein ggf. substituierter Arylrest mit 6 bis 14 C-Atomen,
bedeuten.

Die Copolymere entsprechend der vorliegenden Erfindung enthalten mindestens 2 Baugruppen a), und b). Optional können zusätzlich die Baugruppen c) und d) vorhanden sein.

Die erste Baugruppe a) stellt ein Mono- oder Dicarbonsäure-Derivat mit der allgemeinen Forme la, Ib oder Ic dar. Beim Monocarbonsäure-Derivat la bedeutet R¹ Wasserstoff oder einen aliphatischen Kohlenwasserstoffrest mit 1 bis 20 C-Atomen, vorzugsweise eine Methylgruppe. X in den Strukturen la und Ib steht für - OₐM und/oder - O - (CₘH₂ₘO)ₙ - R² bzw. - NH - (CₘH₂ₘO)ₙ - R² mit folgender Bedeutung für M, a, m, n und R2:
M bedeutet Wasserstoff, ein ein- oder zweiwertiges Metallkation, Ammonium, ein organischer Aminrest sowie a = ½ oder 1, je nachdem, ob es sich bei M um ein ein- oder zweiwertiges Kation handelt. M bedeutet bevorzugt Wasserstoff, ein ein- oder zweiwertiges Metallkation, oder Ammonium. Als organische Aminreste werden vorzugsweise substituierte Ammonium-Gruppen eingesetzt, die sich ableiten von primären, sekundären oder tertiären C₁₋₂₀-Alkylaminen, C₁₋₂₀-Alkanolaminen, C₅₋₈-Cycloalkylaminen und C₈₋₁₄-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

R² bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, m = 2 bis 4 sowie n = 0 bis 200 sein kann. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können.

Anstelle des oder neben dem Dicarbonsäure-Derivat gemäß Formel Ib kann die Baugruppe a) (Mono- oder Dicarbonsäure-Derivat) auch in cyclischer Form entsprechend Formel Ic vorliegen, wobei Y = O (Säureanhydrid) oder NR² (Säureimid) darstellen kann mit der oben bezeichneten Bedeutung für R².

Die zweite Baugruppe b) entspricht Formel II und leitet sich von Oxyalkylenglykol-Alkenylethern ab. R³ bedeutet wiederum Wasserstoff oder einen aliphatischen Kohlenwasserstoffrest mit 1 bis 5 C-Atomen, der ebenfalls linear oder verzweigt bzw. auch ungesättigt sein kann. p kann Werte zwischen 0 und 3 annehmen. Vorzugsweise wird als Baugruppen der Formel II ein Polyethylenglykolmonovinylether mit p = 0 und m" = 2 verwendet. Die Summe n' + n" ist bevorzugt 3 bis 150, insbesondere 5 bis 100.

Gemäß den bevorzugten Ausführungsformen bedeuten in den Formeln la und Ib m = 2 und/oder 3, so daß es sich um Polyalkylenoxid-Gruppen handelt, die sich von Polyethylenoxid und/oder Polypropylenoxid ableiten. In einer weiteren bevorzugten Ausführungsform bedeutet p in Formel II 0 oder 1, d. h. es handelt sich um Vinyl- und/oder Alkylpolyalkoxylate.

Die PCE enthalten üblicherweise 50 bis 95 Mol-% Baugruppen der Formel la und/oder Ib und/oder Ic, und 5 bis 50 Mol-% Baugruppen der Formel II, und optional bis zu 20 Gew.% Comonomere.

Vorzugsweise enthalten diese Polymere 55 bis 75 Mol-% Baugruppen der Formel la und/oder Ib, 19,5 bis 39,5 Mol-% Baugruppen der Formel II, und optional bis zu 20 Mol% Comonomere.

Gemäß einer bevorzugten Ausführungsform enthalten die erfindungsgemäßen Copolymere zusätzlich noch bis zu 50 Mol-%, insbesondere bis zu 20 Mol-% bezogen auf die Summe der Baugruppen a) und b), optionale Comonomere. Optionale Comonomere können beliebige copolymerisierbare ethylenisch ungesättigte Monomere sein. Beispiele sind Vinyl- oder (Meth-) Acrylsäure-Derivaten wie Styrol, α-Methylstyrol, Vinylacetat, Vinylpropionat, Ethylen, Propylen, Isobuten, Hydroxyalkyl(meth)acrylate, Acrylamid, Methacrylamid, N-Vinylpyrrolidon, Allylsulfonsäure, Methallylsulfonsäure, Vinylsulfonsäure, Vinylphosphonsäure, AMPS, Methylmethacrylat, Methylacrylat, Butylacrylat, oder Allylhexylacrylat. Bevorzugte optionale Comonomere sind Styrol, α-Methylstyrol, Vinylacetat, Vinylpropionat, Ethylen, Propylen, Isobuten, N-Vinylpryrrolidon, Allylsulfonsäure, Methallylsulfonsäure, Vinylsulfonsäure oder Vinylphosphonsäure. Besonders bevorzugte optionale Comonomere sind Vinylacetat, Vinylpropionat, Ethylen, Propylen, Isobuten, N-Vinylpryrrolidon, Allylsulfonsäure, Methallylsulfonsäure, Vinylsulfonsäure oder Vinylphosphonsäure. In einer weiteren besonders bevorzugten Ausfürhungsform sind optionale Comonomere Vinylacetat, Vinylpropionat, Ethylen, Propylen, Isobuten, Hydroxyalkyl(meth)acrylate, Acrylamid, Methacrylamid, N-Vinylpyrrolidon, Allylsulfonsäure, Methallylsulfonsäure, Vinylsulfonsäure, Vinylphosphonsäure, AMPS, Methylmethacrylat, Methylacrylat, Butylacrylat, oder Allylhexylacrylat.

Bevorzugt enthält der PCE höchstens 5 mol%, besonders bevorzugt höchstens 1 mol% und insbesondere höchstens 0,1 mol% vinylaromatische Monomere, wie solche der Formel III 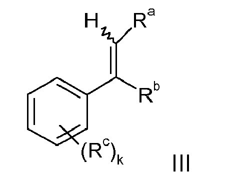 Wobei Ra und R^{b} unabhängig voneinander jeweils für H, Methyl, oder Ethyl stehen, R^{c} Methyl oder Ethyl bedeutet und k eine ganze Zahl von 0 bis 2 ist. Speziell ist der PCE frei von vinylaromatischen Monomeren.

Die Anzahl der sich wiederholenden Struktureinheiten in den Copolymeren ist nicht eingeschränkt. Als besonders vorteilhaft hat es sich jedoch erwiesen, mittlere Molekulargewichte von 1 000 bis 100 000 g/Mol einzustellen.

Als ungesättigte Mono- oder Dicarbonsäure-Derivate, welche die Baugruppen a) der Formel Ia, Ib bzw. Ic bilden, werden vorzugsweise eingesetzt: Acrylsäure, Methacrylsäure, Itaconsäure, Itaconsäureanhydrid, Itaconsäureimid und Itaconsäuremonoamid.

Anstelle von Acrylsäure, Methacrylsäure, Itaconsäure und Itaconsäuremonoamid können auch deren ein- oder zweiwertige Metallsalze, vorzugsweise Natrium-, Kalium-, Calcium- oder Ammoniumsalze, verwendet werden.

Als Acryl-, Methacryl- oder Itaconsäureester werden vor allem Derivate verwendet, deren alkoholische Komponente ein Polyalkylenglykol der allgemeinen Formel HO - (CₘH₂ₘO)ₙ - R² mit R² = H, aliphatischer Kohlenwasserstoffrest mit 1 bis 20 C-Atomen, cycloaliphatischer Kohlenwasserstoffrest mit 5 bis 8 C-Atomen, ggf. substituierter Arylrest mit 6 bis 14 C-Atomen sowie m = 2 bis 4 und n = 0 bis 200.

Die bevorzugten Substituenten am Arylrest sind -OH -, -COO⁻ - oder -SO₃⁻-Gruppen.

Die ungesättigten Monocarbonsäure-Derivate können nur als Monoester vorliegen, während im Falle der Dicarbonsäure Itaconsäure auch Diesterderivate möglich sind.

Die Derivate der Formel Ia, Ib und Ic können auch als Mischung von veresterten und freien Säuren vorliegen und werden in einer Menge von vorzugsweise 55 bis 75 Mol-% verwendet.

Die zweite erfindungswesentliche Komponente zur Herstellung der erfindungsgemäßen Copolymeren stellt ein Oxyalkylenglykol-Alkenylether dar, der vorzugsweise in einer Menge von 19,5 bis 39,5 Mol-% eingesetzt wird.

Die Copolymere entsprechend der vorliegenden Erfindung können nach den üblichen Methoden hergestellt werden, beispielsweise wie in WO 2005/075529, EP 0 736 553, EP 0 894 811, oder WO 2000/77058 beschrieben.

Die Zusammensetzung kann von 0,001 bis 20 Gew% PCE enthalten.

Der Begriff agrochemische Wirkstoffe (im folgenden auch Pestizide genannt) bezeichnet mindestens einen Wirkstoff ausgewählt aus der Gruppe der Fungizide, Insektizide, Nematizide, Herbizide, Safener und/oder Wachstumsregulatoren. Bevorzugte Pestizide sind Fungizide, Insektizide und Herbizide, insbesondere Insektizide. Auch Mischungen von Pestiziden aus zwei oder mehr der vorgenannten Klassen können verwendet werden. Der Fachmann ist vertraut mit solchen Pestiziden, die beispielsweise in Pesticide Manual, 15th Ed. (2009), The British Crop Protection Council, London, gefunden werden können. Geeignete Insektizide sind Insektizide der Klasse der Carbamate, Organophophate, Organochlor-Insektizide, Phenylpyrazole, Pyrethroide, Neonicotinoide, Spinosine, Avermectine, Milbemycine, Juvenil Hormon Analoga, Alkylhalide, Organozinn-Verbindungen, Nereistoxin-Analoga, Benzoylharnstoffe, Diacylhydrazine, METI Akarizide, sowie Insektizide wie Chloropicrin, Pymetrozin, Flonicamid, Clofentezin, Hexythiazox, Etoxazol, Diafenthiuron, Propargit, Tetradifon, Chlorfenapyr, DNOC, Buprofezin, Cyromazin, Amitraz, Hydramethylnon, Acequinocyl, Fluacrypyrim, Rotenon, oder deren Derivate. Geeignete Fungizide sind Fungizide der Klassen Dinitroaniline, Allylamine, Anilinopyrimidine, Antibiotica, aromatische Kohlenwasserstoffe, Benzenesulfonamide, Benzimidazole, Benzisothiazole, Benzophenone, Benzothiadiazole, Benzotriazine, Benzylcarbamate, Carbamates, Carboxamide, Carbonsäureamdide, Chloronitrile, Cyanoacetamideoxime, Cyanoimidazole, Cyclopropanecarboxamide, Dicarboximide, Dihydrodioxazine, Dinitrophenylcrotonate, Dithiocarbamate, Dithiolane, Ethylphosphonate, Ethylaminothiazolcarboxamide, Guanidines, Hydroxy-(2-amino-)pyrimidine, Hydroxyanilides, Imidazole, Imidazolinone, Anorganika, Isobenzofuranone, Methoxyacrylate, Methoxycarbamates, Morpholines, N-Phenylcarbamate, Oxazolidinedione, Oximinoacetate, Oximinoacetamide, Peptidylpyrimidinnucleoside, Phenylacetamide, Phenylamide, Phenylpyrrole, Phenylharnstoffe, Phosphonate, Phosphorothiolate, Phthalamsäuren, Phthalimide, Piperazine, Piperidine, Propionamide, Pyridazinone, Pyridine, Pyridinylmethylbenzamide, Pyrimidinamine, Pyrimidine, Pyrimidinonehydrazone, Pyrroloquinolinone, Quinazolinone, Chinoline, Chinone, Sulfamide, Sulfamoyltriazole, Thiazolecarboxamide, Thiocarbamate, Thiophanate, Thiophenecarboxamide, Toluamide, Triphenylzinn Verbindungen, Triazine, Triazole. Geeignete Herbizide sind Herbizide der Klassen der Acetamide, Amide, Aryloxyphenoxypropionate, Benzamide, Benzofuran, Benzoesäuren, Benzothiadiazinone, Bipyridylium, Carbamate, Chloroacetamide, Chlorcarbonsäuren, Cyclohexanedione, Dinitroaniline, Dinitrophenol, Diphenylether, Glycine, Imidazolinone, Isoxazole, Isoxazolidinone, Nitrile, N-phenylphthalimide, Oxadiazole, Oxazolidinedione, Oxyacetamide, Phenoxycarbonsäuren, Phenylcarbamate, Phenylpyrazole, Phenylpyrazoline, Phenylpyridazine, Phosphinsäuren, Phosphoroamidate, Phosphorodithioate, Phthalamate, Pyrazole, Pyridazinone, Pyridine, Pyridincarbonsäuren, Pyridinecarboxamide, Pyrimidindione, Pyrimidinyl(thio)benzoate, Chinolincarbonsäuren, Semicarbazone, Sulfonylaminocarbonyltriazolinone, Sulfonylharnstoffe, Tetrazolinone, Thiadiazole, Thiocarbamate, Triazine, Triazinone, Triazole, Triazolinone, Triazolocarboxamide, Triazolopyrimidine, Triketone, Uracile, Harnstoffe.

Das Pestizid ist in Wasser bei 20 °C höchstens zu 10 g/l löslich, bevorzugt zu höchstens 0,5 g/l und besonders bevorzugt zu höchstens 0,1 g/l. Pyraclostrobin ist beispielsweise zu 1,9 mg/l, Prochloraz zu 34 mg/L, und Metrafenon zu 0,5 mg/l wasserlöslich.

Das Pestizid hat üblicherweise einen Schmelzpunkt von über 30 °C, bevorzugt über 40 °C und speziell über 45 °C. Pyraclostrobin hat beispielsweise eine Schmelzpunkt von 64 °C, Prochloraz von 47 °C, und Metrafenon von 100 °C.

Die erfindungsgemäße Zusammensetzung umfasst üblicherweise 0.1 bis 70 Gew.% Pestizid, bevorzugt 1 bis 50 Gew. %, insbesondere 3 bis 30 Gew.%, bezogen auf die Zusammensetzung.

Das Pestizid liegt bevorzugt in suspendierter Form in der Zusammensetzung vor, d.h. in Form kristalliner oder amorpher Partikel, die bei 20 °C fest sind. Das suspendierte Pestizid weist meist eine Partikelgrößenverteilung mit einem x₅₀-Wert von 0,1 bis 10 µm auf, bevorzugt von 0,2 µm bis 5 µm und besonders bevorzugt von 0,5 µm bis 2 µm. Die Partikelgrößenverteilung kann durch Laserlichtbeugung einer wässerigen Suspension umfassend die Partikel bestimmt werden. Die Probenvorbereitung, beispielsweise die Verdünnung auf Messkonzentration, hängt bei diesem Messverfahren unter anderem von der Feinheit und Konzentration der Wirkstoffe in der Suspensionsprobe sowie vom verwendeten Messgerät (z.B. Malvern Mastersizer) ab. Die Vorgehensweise muss für das jeweilige System ausgearbeitet werden und ist dem Fachmann bekannt.

Die erfindungsgemäßen Zusammensetzungen können weiterhin auch für agrochemische Formulierungen übliche Hilfsmittel enthalten, wobei sich die Wahl der Hilfsmittel nach der konkreten Anwendungsform, dem Formulierungstyp bzw. dem Wirkstoff richtet. Beispiele für geeignete Hilfsmittel sind Lösungsmittel, feste Trägerstoffe, oberflächenaktive Stoffe (wie Tenside, Solubilisatoren, Schutzkolloide, Netzmittel und Haftmittel), organische und anorganische Verdicker, Bakterizide, Frostschutzmittel, Entschäumer, ggf. Kleber (z. B. für Saatgutbehandlung) oder übliche Hilfsmittel für Köderformulierung (z. B. Lockstoffe, Futtermittel, Bitterstoffe).

Als Lösungsmittel kommen Wasser oder organische Lösungsmittel wie Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Gykole, Ketone wie Cyclohexanon, gamma-Butyrolacton, Dimethylfettsäureamide, Fettsäuren und Fettsäureester und stark polare Lösungsmittel, z.B. Amine wie N-Methylpyrrolidon, in Betracht. Grundsätzlich können auch Lösungsmittelgemische verwendet werden sowie Gemische aus den vorstehend genannten Lösungsmitteln und Wasser. Bevorzugt enthält die Zusammensetzung Wasser.

Feste Trägerstoffe sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe. Die Formulierung enthält bevorzugt keine festen Trägerstoffe.

Als oberflächenaktive Stoffe (Adjuvantien, Netz-, Haft-, Dispergier- oder Emulgiermittel) kommen die Alkali-, Erdalkali-, Ammoniumsalze von aromatischen Sulfonsäuren, z. B. von Lignin-(Borresperse^{®}-Typen, Borregaard, Norwegen), Phenol-, Naphthalin-(Morwet^{®}-Typen, Akzo Nobel, USA) und Dibutylnaphthalinsulfonsäure (Nekal^{®}-Typen, BASF, Deutschland), sowie von Fettsäuren, Alkyl- und Alkylarylsulfonaten, Alkyl-, Laurylether- und Fettalkoholsulfaten, sowie Salze sulfatierter Hexa-, Hepta- und Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen sowie Proteine, denaturierte Proteine, Polysaccharide (z.B. Methylcellulose), hydrophob modifizierte Stärken, Polyvinylalkohol (Mowiol^{®}-Typen, Clariant, Schweiz), Polycarboxylate (Sokalan^{®}-Typen, BASF, Deutschland), Polyalkoxylate, Polyvinylamin (Lupamin^{®}-Typen, BASF, Deutschland), Polyethylenimin (Lupasol^{®}-Typen, BASF, Deutschland), Polyvinylpyrrolidon und deren Copolymere in Betracht.

Geeignete Verdicker sind Verbindungen, die der Formulierung ein modifiziertes Fließverhalten verleihen, d. h. eine hohe Viskosität im Ruhezustand und niedrige Viskosität im bewegten Zustand. Beispiele sind Polysaccharide, Proteine (wie Casein oder gelatine), synthetische Polymere, oder anorganische Schichtmineralien. Solche Verdicker sind kommerziell erhältlich, beispielsweise Xanthan Gum (Kelzan^{®}, CP Kelco, USA), Rhodopol^{®} 23 (Rhodia, Frankreich) oder Veegum^{®} (R.T. Vanderbilt, USA) oder Attaclay^{®} (Engelhard Corp., NJ, USA). Der Gehalt an Verdicker in der Formulierung richtet sich nach der Wirksamkeit des Verdickers. Der Fachmann wird einen Gehalt wählen, um die gewünschte Viskosität der Formulierung zu erhalten. Der Gehalt wird meist 0,01 bis 10 Gew.% betragen.

Bakterizide können zur Stabilisierung der Zusammensetzung zugesetzt werden. Beispiele für Bakterizide sind solche basierend auf Diclorophen und Benzylalkoholhemiformal sowie Isothiazolinonderivaten wie Alkylisothiazolinonen und Benzisothiazolinonen (Acticide^{®} MBS der Fa. Thor Chemie). Beispiele für geeignete Frostschutzmittel sind Ethylenglycol, Propylenglycol, Harnstoff und Glycerin. Beispiele für Entschäumer sind Silikonemulsionen (wie z. B. Silikon^{®} SRE, Wacker, Deutschland oder Rhodorsil^{®}, Rhodia, Frankreich), langkettige Alkohole, Fettsäuren, Salze von Fettsäuren, fluororganische Verbindungen und deren Gemische.

Als Kleber kommen alle üblichen in Beizmitteln einsetzbaren Bindemittel in Frage. Vorzugsweise genannt seien Polyvinylpyrrolidon, Polyvinylacetat, Polyvinylalkohol und Tylose.

In eine bevorzugten Ausführungsform ist die Zusammensetzung eine wässrige Suspension, in der mindestens ein Pestizid in partikulärer Form oder in verkapselter Form vorliegt. Bevorzugt enthält die Suspension 0,0001 bis 10 Gew.%, besonders bevorzugt 0,0001 bis 1 Gew.%, und insbesondere 0,001 bis 0,5 Gew.% Polycarboxylatether.

In einer besonders bevorzugten Ausführungsform ist die Zusammensetzung eine agrochemische Formulierung in Form eines Suspensionskonzentrat (SC). Das SC enthält üblicherweise mindestens 10 Gew.% Wasser, bevorzugt von 20 bis 80 Gew.%. Der Gehalt an PCE kann bei 0,01 bis 10 Gew.%, bevorzugt bei 0,05 bis 2 Gew%, und insbesondere bei 0,05 bis 0,8 Gew%, liegen. Mindestens ein Pestizid liegt in suspendierter Form vor.

In einer weiteren besonders bevorzugten Ausführungsform ist die Zusammensetzung eine agrochemische Formulierung in Form einer Suspoemulsion (SE). Die SE enthält üblicherweise mindestens 10 Gew.% Wasser, bevorzugt von 20 bis 80 Gew.%. Der Gehalt an PCE kann bei 0,01 bis 10 Gew.%, bevorzugt bei 0,05 bis 2 Gew%, und insbesondere bei 0,05 bis 0,8 Gew%, liegen. Mindestens ein Pestizid kann in suspendierter Form vorliegen, und ein weiteres Pestizid kann in emulgierter Form vorliegen.

In einer weiteren besonders bevorzugten Ausführungsform ist die Zusammensetzung eine agrochemische Formulierung in Form einer Kapselsuspension (CS). Die CS enthält üblicherweise mindestens 10 Gew.% Wasser, bevorzugt von 20 bis 80 Gew.%. Der Gehalt an PCE kann bei 0,01 bis 10 Gew.%, bevorzugt bei 0,05 bis 2 Gew%, und insbesondere bei 0,05 bis 0,8 Gew%, liegen. Mindestens ein Pestizid kann in verkapselter Form vorliegen.

In einer weiteren bevorzugten Ausführungsform ist die Zusammensetzung eine feste Zusammensetzung ist. Bevorzugt enthält die feste Zusammensetzung 0,01 bis 20 Gew.%, bevorzugt 0,05 bis 5 Gew%, und insbesondere 0,1 bis 1,0 Gew%, Polycarboxylatether.

In einer besonders bevorzugten Ausführungsform ist die Zusammensetzung eine agrochemische Formulierung in Form einer wasserdispergierbaren Granulats (WG). Das WG ist meist ein Feststoff. Der Gehalt an PCE kann bei 0,01 bis 20 Gew.%, bevorzugt bei 0,05 bis 5 Gew%, und insbesondere 0,1 bis 1,0 Gew%, liegen. Mindestens ein Pestizid kann in Form fester Teilchen vorliegen.

Die vorliegende Erfindung betrifft weiterhin ein Verfahren zur Herstellung der erfindungsgemäßen Zusammensetzung indem man das Pestizid und den Polycarboxylatether in Kontakt bringt. Übliche Verfahren zur Herstellung von agrochemischen Formulierungen sind dafür geeignet.

Die erfindungsgemäße Zusammensetzung wird meist vor der Anwendung verdünnt um den sog. Tankmix herzustellen. Zur Verdünnung kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht. Bevorzugt wird Wasser verwendet. Die verdünnte Zusammensetzung wird üblicherweise durch Versprühen oder Vernebeln angewendet. Der Gehalt an PCE im Tankmix liegt meist bei unter 0,1 Gew.%, bevorzugt bei unter 0,01 Gew.%, und unsbesondere bei unter 0,001 Gew.%.

Zu dem Tankmix können Öle verschiedenen Typs, Netzmittel, Adjuvants, Herbizide, Bakterizide, Fungizide unmittelbar vor der Anwendung (Tankmix) zugesetzt werden. Diese Mittel können zu den erfindungsgemäßen Zusammensetzungen im Gewichtsverhältnis 1:100 bis 100:1, bevorzugt 1:10 bis 10:1 zugemischt werden. Die Pestizidkonzentration im Tankmix kann in größeren Bereichen variiert werden. Im Allgemeinen liegen sie zwischen 0,0001 und 10%, vorzugsweise zwischen 0,01 und 1 %. Die Aufwandmengen liegen bei der Anwendung im Pflanzenschutz je nach Art des gewünschten Effektes zwischen 0,01 und 2,0 kg Wirkstoff pro ha.

Die vorliegende Erfindung betrifft weiterhin ein Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die erfindungsgemäße Zusammensetzung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.

Die vorliegende Erfindung betrifft weiterhin Saatgut enthaltend die erfindungsgemäße Zusammensetzung.

Die vorliegende Erfindung betrifft weiterhin die Verwendung des Polycarboxylatethers zur Dispergierung von Pestiziden mit einer Löslichkeit in Wasser von höchstens 10 g/l in wässrigen Zusammensetzungen. Das Pestizid liegt bevorzugt in suspendierter Form in der wässrigen Zusammensetzung vor, d.h. in Form kristalliner oder amorpher Partikel, die bei 20 °C fest sind. Der Gehalt an PCE in der wässrigen Zusammensetzung liegt meist bei unter 0,1 Gew.%, bevorzugt bei unter 0,01 Gew.%, und unsbesondere bei unter 0,001 Gew.%.

In einer Ausführungsform der vorliegenden Erfindung ist das Verfahren zum Beizen von Saatgut, wobei man
(a) Saatgut mit einem Pestizid mit einer Löslichkeit in Wasser von höchstens 10 g/l und dem Polycarboxylatether behandelt; und
(b) das in Schritt (a) erhaltene Saatgut gegebenenfalls trocknet

Der Polycarboxylatether kann wie vorstehend beschrieben eingesetzt werden oder in Form der erfindungsgemäßen Zusammensetzung. Hierbei kann -falls gewünscht- die erfindungsgemäße Zusammensetzung oder der Polycarboxylatether vor Applikation auf das Saatgut mit einem Lösungsmittel, vorzugsweise Wasser verdünnt werden.

Dieses so vorbehandelte Saatgut kann anschliessend mit einer agrochemischen Suspensionsformulierung enthaltend mindestens einen, zur Beizung von Saatgut geeigneten agrochemischen Wirkstoff, wobei der Wirkstoff in festen Partikeln vorliegt, welche eine Größe zwischen 0,1 µm und 10µm haben, behandelt werden.

Diese agrochemischen Formulierungen sind Suspensionsformulierungen eines (oder mehrerer) agrochemischen Wirkstoffes sein (zBsp. SC, OD, FS), wobei der Wirkstoff die oben angeführten Teilchengrößen aufweisen muß. Die Herstellung von Suspensionsformulierungen ist dem Fachmann bekannt, und ist weiter oben erläutert.

Alternativ kann die Wirkstoffsuspension auch aus einer (ggf. auch kommerziell erhältlichen) Festformulierung eines Wirkstoffes durch Dispergieren in einem Lösungsmittel, vorzugsweise Wasser, hergestellt werden (s.o.).

Der Begriff Saatgut umfasst Saatgut aller Arten, wie z.B. Körner, Samen, Früchte, Knollen, Stecklinge und ähnliche Formen. Bevorzugt beschreibt der Begriff Saatgut hier Körner und Samen.

Geeignetes Saatgut sind Getreidesaaten Halmfruchtsaaten, Hackfruchtsaaten, Ölsaaten, Gemüsesaaten, Gewürzsaatgut, Zierpflanzensaatgut, z.B. Saatgut von Hartweizen, Weizen, Gerste, Hafer, Roggen, Mais (Futtermais und Zuckermais), Soja , Ölsaaten, Kreuzblütler, Baumwolle, Sonnenblumen, Bananen, Reis, Raps, Rüben, , Zuckerrüben, Futterrüben, Eierpflanzen, Kartoffeln, Gras, (Zier-)Rasen, Futtergras, Tomaten, Lauch, Kürbis, Kohl, Eisbergsalat, Pfeffer, Gurken, Melonen, Brassica species, Melonen, Bohnen, Erbsen, Knoblauch, Zwiebeln, Karotten, Zuckerrohr, Tabak, Weintrauben, Petunien und Geranien, Stiefmütterchen, Springkraut. Bevorzugt beschreibt der Begriff Saatgut hier Getreide und Soja.

Die erfindungsgemäßen Zusammensetzungen können zum Beizen von Saatgut durch herkömmliche Züchtungsmethoden erhaltener Pflanzen sowie zum Beizen von Saatgut transgener Pflanzen eingesetzt werden.

Wie bereits erwähnt kann Saatgut eingesetzt werden, das gegenüber Herbiziden tolerant ist, z.B. gegenüber Sulfonylharnstoffen, Imidazolinonen oder Glufonsinat oder Glyphosate resistenen Pflanzen (s. z.B. EP-A-0242236, EP-A-242246) (WO 92/00377) (EP-A-0257993, U.S. Pat. No. 5,013,659) oder Saatgut transgener Pflanzen, z.B. Baumwolle, die Bacillus thuringiensis toxin (Bt toxins) produzieren und dadurch gegenüber bestimmten Schadorganismen gegenüber resistent sind (EP-A-0142924, EP-A-0193259).

Weiterhin kann auch Saatgut von Pflanzen eingesetzt werden, die im Vergleich mit herkömmlichen Pflanzen modifizierte Eigenschaften aufweisen. Beispiele hierfür sind geänderte Stärkesynthese (e.g. WO 92/11376, WO 92/14827, WO 91/19806) oder Fettsäurezusammensetzungen (WO 91/13972).

Der Begriff Pflanzen schließt auch solche Pflanzen ein, die durch Züchtung, Mutagenese oder gentechnische Methoden verändert wurden einschließlich der auf dem Markt oder in Entwicklung befindlichen biotechnologischen Agrarprodukte. Gentechnisch veränderte Pflanzen sind Pflanzen, deren genetisches Material in einer Weise verändert worden ist, wie sie unter natürlichen Bedingungen durch Kreuzen, Mutationen oder natürliche Rekombination (d.h. Neuzusammenstellung der Erbinformation) nicht vorkommt. Dabei werden in der Regel ein oder mehrere Gene in das Erbgut der Pflanze integriert, um die Eigenschaften der Pflanze zu verbessern. Derartige gentechnische Veränderungen umfassen auch posttranslationale Modifikationen von Proteinen, Oligo- oder Polypeptiden z.B. mittels Glykolsylierung oder Bindung von Polymeren wie z.B. prenylierter, acetylierter oder farnelysierter Reste oder PEG-Reste.

Beispielhaft seien Pflanzen genannt, die durch züchterische und gentechnische Maßnahmen eine Toleranz gegen bestimmter Herbizidklassen, wie Auxinherbizide wie z. B. Dicamba oder 2,4-D, Ausbleichungsherbizide wie Hydroxyphenylpyruvat-Dioxygenase (HPPD)-Inhibitoren oder Phytoendesaturase (PDS)-Inhibitoren, Acetolactat-Synthase (ALS)-Inhibitoren wie z. B. Sulfonylharnstoffe, Enolpyruvylshikimat-3-Phosphat-Synthase (EPSPS)-Inhibitoren wie z. B. Glyphosat, Glutaminsynthetase (GS)-Inhibitoren wie z. B. Glufosinat, Lipidbiosynthese-Inhibitoren wie z. B. Acetyl-CoA-Carboxylase (ACCase)-Inhibitoren, oder Oxynil-Herbizide (z. B. Bromoxynil oder loxynil) erworben haben. Weiterhin wurden Pflanzen erzeugt, die durch mehrere gentechnische Maßnahmen resistent gegenüber mehreren Herbizidklassen sind, z B. resistent gegen Glyphosat und Glufosinat, oder gegen Glyphosat und einer Herbizid einer anderen Klasse wie z. B. ALS-Inhibitoren, HPPD-Inhibitoren, Auxinherbizide und ACCase-Inhibitoren. Diese Herbizidresistenztechnologien sind z. B. beschrieben in Pest Managem. Sci. 61, 2005, 246; 61, 2005, 258; 61, 2005, 277; 61, 2005, 269; 61, 2005, 286; 64, 2008, 326; 64, 2008, 332; Weed Sci. 57, 2009, 108; Austral. J. Agricult. Res. 58, 2007, 708; Science 316, 2007, 1185; und darin zitierten Referenzen. Durch Züchtung und Mutagenese wurde z. B. Clearfield^{®}-Raps (BASF SE, Deutschland) erzeugt, der eine Toleranz gegen Imidazolinone, z. B. Imazamox, hat, oder ExpressSun^{®}-Sonnenblumen (DuPont, USA), die eine Toleranz gegen Sulfonylharnstoffherbizide, wie z. B. Tribenuron, haben. Mit Hilfe gentechnischer Methoden wurden Kulturpflanzen, wie Soja, Baumwolle, Mais, Rüben und Raps, erzeugt, die resistent gegen Glyphosat oder Glufosinat sind, erzeugt, welche unter den Handelsnamen Roundup-Ready^{®} (Glyphosat-resistent, Monsanto, U.S.A.), Cultivance^{®} (Imidazolinon-resistent, BASF SE, Deutschland) und Liberty Link^{®} (Glufosinat-resistent, Bayer CropScience, Deutschland) erhältlich sind.

Weiterhin sind auch Pflanzen umfasst, die mit Hilfe gentechnischer Maßnahmen ein oder mehrere Toxine, z. B. solche aus dem Bakterienstamm Bacillus, produzieren. Toxine, die durch solche gentechnisch veränderten Pflanzen hergestellt werden, umfassen z. B. insektizide Proteine von Bacillus spp., insbesondere von B. thuringiensis, wie die Endotoxine Cry1Ab, Cry1Ac, Cry1 F, Cry1 Fa2, Cry2Ab, Cry3A, Cry3Bb1, Cry9c, Cry34Ab1 oderCry35Ab1; oder vegetative insektizide Proteine (VIPs), z. B. VIP1, VIP2, VIP3, oder VIP3A; insektizide Proteine von Nematoden-kolonisierenden Bakterien, z. B. Photorhabdus spp. oder Xenorhabdus spp.; Toxine aus tierischen Organismen, z. B. Wepsen,-, Spinnen- oder Skorpionstoxine; pilzliche Toxine, z. B. aus Streptomyceten; pflanzliche Lektine, z. B. aus Erbse oder Gerste; Agglutinine; Proteinase-Inhibitoren, z. B. Trypsin-Inhibitoren, Serinprotease-Inhibitoren, Patatin, Cystatin oder Papain-Inhibitoren; Ribosomen-inaktivierende Proteine (RIPs), z. B. Ricin, Mais-RIP, Abrin, Luffin, Saporin oder Bryodin; Steroid-metabolisierende Enzyme, z. B. 3-Hydroxysteroid-Oxidase, Ecdysteroid-IDP-Glycosyl-Transferase, Cholesterinoxidase, Ecdyson-Inhibitoren oder HMG-CoA-Reduktase; lonenkanalblocker, z. B. Inhibitoren von Natrium- oder Calziumkanälen; Juvenilhormon-Esterase; Rezeptoren für das diuretischen Hormon (Helicokininrezeptoren); Stilbensynthase, Bibenzylsynthase, Chitinasen und Glucanasen. Diese Toxine können in den Pflanzen auch als Prätoxine, Hybridproteine, verkürzte oder anderweitig modfizierte Proteine produziert werden. Hybridproteine zeichnen sich durch eine neue Kombination von verschiedenen Proteindomänen aus (siehe z. B. WO 2002/015701). Weitere Besipiele für derartige Toxine oder gentechnisch veränderte Pflanzen, die diese Toxine produzieren, sind in EP-A 374 753, WO 93/07278, WO 95/34656, EP-A 427 529, EP-A 451 878, WO 03/18810 und WO 03/52073 offenbart. Die Methoden zur Herstellung dieser gentechnisch veränderten Pflanzen sind dem Fachmann bekannt und z. B. in den oben erwähnten Publikationen dargelegt. Zahlreiche der zuvor genannten Toxine verleihen den Pflanzen, die diese produzieren, eine Toleranz gegen Schädlinge aus allen taxonomischen Arthropodenklassen, insbesondere gegen Käfer (Coeleropta), Zweiflügler (Diptera) und Schmetterlinge (Lepidoptera) und gegen Nematoden (Nematoda). Gentechnisch veränderte Pflanzen, die ein oder mehrere Gene, die für insektizide Toxine kodieren, produzieren sind z. B. in den oben erwähnten Publikationen beschrieben und zum Teil kommerziell erhältlich, wie z. B. YieIdGard^{®} (Maissorten, die das Toxin Cry1Ab produzieren), YieIdGard^{®} Plus (Maissorten, die die Toxine Cry1Ab und Cry3Bb1 produzieren), Starlink^{®} (Maissorten, die das Toxin Cry9c produzieren), Herculex^{®} RW (Maissorten, die die Toxine Cry34Ab1, Cry35Ab1 und das Enzym Phosphinothricin-N-Acetyltransferase [PAT] produzieren); NuCOTN^{®} 33B (Baumwollsorten, die das Toxin Cry1Ac produzieren), Bollgard^{®} I (Baumwollsorten, die das Toxin Cry1Ac produzieren), Bollgard^{®} II (Baumwollsorten, die die Toxine Cry1Ac und Cry2Ab2 produzieren); VIP-COT^{®} (Baumwollsorten, die ein VIP-Toxin produzieren); NewLeaf^{®} (Kartoffelsorten, die das Toxin Cry3A produzieren); Bt-Xtra^{®}, NatureGard^{®}, KnockOut^{®}, BiteGard^{®}, Protecta^{®}, Bt11 (z. B. Agrisure^{®} CB) und Bt176 von Syngenta Seeds SAS, Frankreich, (Maissorten, die das Toxin Cry1Ab und das PAT-Enyzm produzieren), MIR604 von Syngenta Seeds SAS, Frankreich (Maissorten, die ein modifizierte Version des Toxins Cry3A produzieren, siehe hierzu WO 03/018810), MON 863 von Monsanto Europe S.A., Belgien (Maissorten, die das Toxin Cry3Bb1 produzieren), IPC 531 von Monsanto Europe S.A., Belgien (Baumwollsorten, die eine modifizierte Version des Toxins Cry1Ac produzieren) und 1507 von Pioneer Overseas Corporation, Belgien (Maissorten, die das Toxin Cry1 F und das PAT-Enyzm produzieren).

Weiterhin sind auch Pflanzen umfasst, die mit Hilfe gentechnische Maßnahmen ein oder mehrere Proteine produzieren, die eine erhöhte Resistenz oder Widerstandfähigkeit gegen bakterielle, virale oder pilzliche Pathogene bewirken, wie z. B. sogenannte Pathogenesis-related-Proteine (PR-Proteine, siehe EP-A 0 392 225), Resistenzproteine (z. B. Kartoffelsorten, die zwei Resistenzgene gegen Phytophthora infestans aus der mexikanischen Wildkartoffel Solanum bulbocastanum produzieren) oder T4-Lysozym (z. B. Kartoffelsorten, die durch die Produktion diese Proteins resistent gegen Bakterien wie Erwinia amylvora ist). Weiterhin sind auch Pflanzen umfasst, deren Produktivität mit Hilfe gentechnischer Methoden verbessert wurde, indem z. B. die Ertragsfähigkeit (z. B. Biomasse, Kornertrag, Stärke-, Öl- oder Proteingehalt), die Toleranz gegenüber Trockenheit, Salz oder anderen begrenzenden Umweltfaktoren oder die Widerstandsfähigkeit gegenüber Schädlingen und pilzlichen, bakteriellen und viralen Pathogenen gesteigert wird. Weiterhin sind auch Pflanzen umfasst, deren Inhaltsstoffe insbesondere zur Verbesserung der menschlichen oder tierischen Ernährung mit Hilfe gentechnischer Methoden verändert wurden, indem z. B. Ölpflanzen gesundheitsfördernde langkettige Omega-3-Fettsäuren oder einfach ungesättigte Omega-9-Fettsäuren (z. B. Nexera^{®}-Raps, DOW Agro Sciences, Kanada) produzieren. Weiterhin sind auch Pflanzen umfasst, die zur verbesserten Produktion von Rohstoffen mit Hilfe gentechnischer Methoden verändert wurden, indem z. B. der Amylopektin-Gehalt von Kartoffeln (Amflora^{®}-Kartoffel, BASF SE, Deutschland) erhöht wurde.

Im Rahmen der vorliegenden Erfindung wird auch Saatgut beansprucht, das eine erfindungsgemäße Zusammensetzung enthält.

Die Aufwandmengen liegen im allgemeinen zwischen 0,1g-10kg Wirkstoff pro 100kg Saatgut, vorzugsweise 1 g bis 5kg, besonders bevorzugt von 1g - 2,5kg. Für spezielles Saatgut wie Salat können die Aufwandmengen auch höher sein. Für Soja werden Auwandmengen von 0,1 - 10 kg verwendet.

Die Saatgutbehandlung kann durch Besprühung des Saatgutes mit der Formulierung oder Vermischen des Saatgutes mit der Formulierung ggf. gefolgt von Trocknen des Saatgutes vor dem Säen und vor Keimung nach dem Fachmann bekannten Methoden durchgeführt werden.

Des weiteren umfasst die vorliegende Erfindung ein Verfahren zur Regulation des Wachstums von Pflanzen und/oder zur Bekämpfung unerwünschten Pflanzenwuchses und /oder zur Bekämpfung von unerwünschtem Insekten- oder Milbenbefall auf Pflanzen und/oder zur Bekämpfung von phytopathogenen Pilzen, dadurch gekennzeichnet, dass man Saatgüter von Nutzpflanzen mit einem Pestizid mit einer Löslichkeit in Wasser von höchstens 10 g/l und dem Polycarboxylatether behandelt behandelt.

Vorzugsweise umfasst die Erfindung Verfahren zur Bekämpfung von unerwünschtem Insekten- oder Milbenbefall auf Pflanzen und/oder zur Bekämpfung von phytopathogenen Pilzen, dadurch gekennzeichnet, dass man Saatgüter von Nutzpflanzen mit einem Pestizid mit einer Löslichkeit in Wasser von höchstens 10 g/l und dem Polycarboxylatether behandelt behandelt. Der Polycarboxalatether kann wie vorstehend beschrieben oder in Form der erfindungsgemäßen Zusammensetzung eingesetzt werden.

Die Vorteile der Erfindung sind dass mit geringeren Mengen des erfindungsgemäßen Dispergiermittel bereits eine hohe Dispersionsstabiliät erreicht werden kann. Dies gilt insbesondere bei Formulierungen, die hohe Konzentrationen von Pestizid enthalten. Die erfindungsgemäßen Dispergiermittel stabilisieren auch hochkonzentrierte Festformulierungen nach Verdünnung mit Wasser. Bei Suspensionen (v.a. Suspensionskonzentraten) wird durch geringe Mengen Zusatz von erfindungsgemäßen Dispergiermittel die Serumbildung verringert, und die Lagerstabilität erhöht.

Nachfolgende Beispiele erläutern die Erfindung ohne sie einzuschränken.

### Beispiele

Flexity®: Ein wässriges Suspensionskonzentrat enthaltend 25,2 Gew.% Metrafenon und Additive, wie Alkylpolysaccharid und Natriumalkylnaphthalinsulfonat-Formaldeyd-Kondensat, pH etwa 7, Oberflächenspannung 31 mN/m (20 °C), dynamische Viskosität 616 mPa.s (20 °C, 100 1/s), kommerziell erhältlich von BASF SE.

Glenium® ACE 430: erfindungsgemäßer Polycarboxylatether, Flüssigkeit mit Feststoffgehalt etwa 30 Gew.%, pH 5,5+/- 1 bei 20 °C, kommerziell erhältlich von BASF Construction Polymers GmbH.

Glenium® B233: erfindungsgemäßer Polycarboxylatether, wasserlösliche Flüssigkeit mit Feststoffgehalt >30 Gew.%, pH etwa 7 bei 20 °C, kommerziell erhältlich von BASF Construction Polymers GmbH.

Glenium® 3400 NV: erfindungsgemäßer Polycarboxylatether, wasserlösliche Flüssigkeit mit Feststoffgehalt >30 Gew.%, pH etwa 7,8 bei 20 °C, kommerziell erhältlich von BASF Construction Polymers GmbH.

Glenium® ACE 30: erfindungsgemäßer Polycarboxylatether, wasserlösliche Flüssigkeit mit Feststoffgehalt etwa 30 Gew.%, pH 6,5+/- 1,5 bei 20 °C, kommerziell erhältlich von BASF Construction Polymers GmbH.

### Beispiel 1 - Dispersionsstabilität

Das Suspensionskonzentrat (SC) Flexity® wurde mit 1, 10 oder 25 g/l Polycarboxlylatether (PCE) versetzt bzw. zur Kontrolle ohne Polycarboxlylatether gelagert. Die Dispersionsstabilität wurde direkt nach Zugabe ("Initial") des Polycarboxlylatether und nach 14 tägiger Lagerung bei 54 °C ("gelagert") bestimmt.

Die Dispersionsstabilität wurde nach CIPAC MT180 bestimmt in einem graduierten Spitzzylinder, in den 100 ml Wasser (19,2 ° dH) vorgelegt wird. Nach Zugabe von 1 ml Suspensionskonzentrat wird die Mischung zur vollständigen Dispersion gebracht und dann stehen gelassen. Das Sedimentvolumen wird nach 120 min abgelesen (Tabelle 1).

**Tabelle 1:**

| PCE | PCE in SC | PCE in Dispersion | Sediment [ml] Initial | Sediment [ml] Gelagert |
|---|---|---|---|---|
| Ohne | - | - | 0,1 | 0,5 |
| Glenium® B233 | 1 g/L | 0,01 g/L | <0,05 | <0,05 |
| Glenium® 3400 NV | 1 g/L | 0,01 g/L | <0,05 | <0,05 |
| Glenium® 3400 NV | 10 g/L | 0,1 g/L | <0,05 | <0,05 |
| Glenium® 3400 NV | 25 g/L | 0,25 g/L | <0,05 | <0,05 |
| Glenium® ACE 30 | 1 g/L | 0,01 g/L | <0,05 | <0,05 |
| Glenium® ACE 430 | 1 g/L | 0,01 g/L | <0,05 | <0,05 |

### Beispiel 2 - Dispersionsstabilität von Granulaten nach Dispergieren

Eine Granulat-Formulierung enthaltend 75 Gew.% Tritosulfuron wurde mit 0,25 Gew.% (2,5 g/kg) Polycarboxlylatether versetzt.

Die Sedimentvolumen wurde bestimmt in einem graduierten Spitzzylinder, in den 100 ml Wasser (19,2 ° dH) vorgelegt wird. Nach Zugabe von 0,2 g bzw. 2 g Granulat wird die Mischung zur vollständigen Dispersion gebracht und dann stehen gelassen. Das Sedimentvolumen wird nach 30 min abgelesen. Zur Kontrolle wurde auch eine Rezeptur ohne Polycarboxlylatether gelagert. Die Ergebnisse sind in Tabelle 2 und 3 zusammengefasst.

**Tabelle 2: Dispersionsstabilität**

| PCE | Granulat in Dispersion | PCE in Dispersion | Sediment [ml] Initial | Sediment [ml] Gelagert |
|---|---|---|---|---|
| Ohne | 2 g/l | - | 0,2 ml | < 0,25ml |
| Glenium® ACE 430 | 2 g/l | 0,005 g/l | <0,05 ml | < 0,15ml |
| Glenium® ACE 30 | 2 g/l | 0,005 g/l | 0,15 ml | < 0,2ml |
| Ohne | 20 g/l | - | 2 ml | 5 ml |
| Glenium® ACE 430 | 20 g/l | 0,05 g/l | 0,6 ml | 0,65 ml |
| Glenium® ACE 30 | 20 g/l | 0,05 g/l | 0,75 ml | 0,6 ml |

**Tabelle 3:**

| PCE | Dispergierfähigkeit Initial [%] | Dispergierfähigkeit Gelagert [%] |
|---|---|---|
| Ohne | 90 % | 87 % |
| Glenium® ACE 430 | 97 % | 96 % |
| Glenium® ACE 30 | 94 % | 94 % |

### Beispiel 3 - Lagerstabilität von Suspensionskonzentraten

Das Suspensionskonzentrat Flexity® wurde mit 1g/l Polycarboxlylatether versetzt bzw. zur Kontrolle ohne Polycarboxlylatether gelagert. Die Lagerstabilität hinsichtlich Sedimentation wurde nach 14 tägiger Lagerung bei 54 °C bestimmt. Die überstehende Flüssigkeit (Serumbildung) wurde durch visuelle Beurteilung bestimmt (Tabelle 4).

**Tabelle 4:**

| PCE | Menge PCE | Serumbildung Gelagert [%] |
|---|---|---|
| Ohne | - | 6% |
| Glenium® B233 | 1 g/L | 4,1 % |
| Glenium® 3400 NV | 1 g/L | 4,2% |

### Beispiel 4 -Hochkonzentrierer Suspensionen für Saatgutbehandlung

Es wurde zu 200 mL Wasserjeweils 5 g des zu testenden Dispergiermittels gegeben und darin jeweils 800 g festes Calciumcarbonat eingerührt (Tabelle 5). Der Vergleichsversuch mit dem kommerziellen Dispergiermittel Ufoxan 3A (ein Natriumlignosulfonat CAS 8061-51-6, von Borregard Lignoech) führte zu einer nicht fliessfägien Konsistenz.

**Tabelle 5:**

| Ansatz | Dispergiermittel | Konsistenz |
|---|---|---|
| Vergleich | Ufoxane® 3A | breiig, nicht fliessfähig |
| 1 | Glenium® B233 | dünnflüssig |
| 2 | Glenium® ACE 30 | dünnflüssig |

Die Suspension 1 gemäß Tabelle 5 wurde in gleichen Teilen (1:1:1) mit dem kommerziell verfügbaren Saatgutbehandlungsprodukt Rubin® TT (wässriges Suspensionkonzentrat enthaltend 42 g/l Pyrimethanil, 25 g/l Triticonazol und 38,6 g/l Prochloraz, erhältlich von BASF SE) sowie mit Wasser gemischt. Von dieser Mischung wurden in einem handelsüblichen Laborbeizer der Marke Rotostat 6 mL auf 1 kg Weizen aufgebracht.

## Patentansprüche

1. Zusammensetzung enthaltend ein Pestizid mit einer Löslichkeit in Wasser von höchstens 10 g/l und ein Polycarboxylatether auf Basis von
a) Baugruppen der Formel la und/oder Ib und/oder Ic 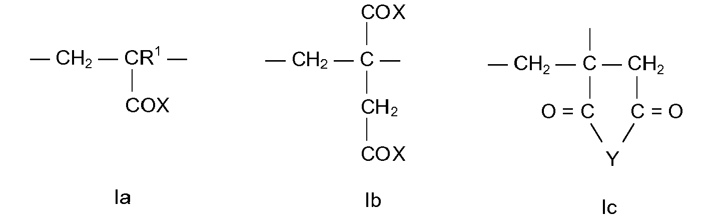 wobei
R¹ = Wasserstoff oder ein aliphatischer Kohlenwasserstoffrest mit 1 bis 20 C-Atomen,
X = -OMa, -O-(CₘH₂ₘO)ₙ-R², -NH-(CₘH₂ₘO)ₙR²,
M = Wasserstoff, ein ein- oder zweiwertiges Metallkation, Ammoniumion, ein organischer Aminrest,
a = ½ oder 1,
R² = Wasserstoff, ein aliphatischer Kohlenwasserstoffrest mit 1 bis 20 C-Atomen, ein cycloaliphatischer Kohlenwasserstoffrest mit 5 bis 8 C-Atomen, ein ggf. substituierter Arylrest mit 6 bis 14 C-Atomen,
Y = O, NR²,
m = 2 bis 4, und
n = 0 bis 200
bedeuten, und
b) Baugruppen der allgemeinen Formel II 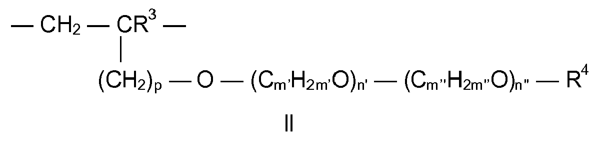 wobei
R³ = Wasserstoff oder einen aliphatischen Kohlenwasserstoffrest mit 1 bis 5 C-Atomen,
n',n" = unabhängig voneinander 0 bis 200,
m',m" = unabhängig voneinander 2 bis 4,
n' + n" = 1 bis 200,
p = 0 bis 3, bedeuten und
R⁴ = Wasserstoff, ein aliphatischer Kohlenwasserstoffrest mit 1 bis 20 C-Atomen, ein cycloaliphatischer Kohlenwasserstoffrest mit 5 bis 8 C-Atomen, ein ggf. substituierter Arylrest mit 6 bis 14 C-Atomen,
bedeuten.

2. Zusammensetzung nach Anspruch 1, wobei als Baugruppen der Formel la und/oder Ib und/oder Ic die Monomere Acrylsäure, Methacrylsäure, Itaconsäure, Itaconsäureanhydrid, Itaconsäureimid, Itaconsäuremonoamid, oder deren ein- oder zweiwertige Metallsalze verwendet werden.

3. Zusammensetzung nach Anspruch 1 oder 2, wobei als Baugruppen der Formel II Polyethylenglykolmonovinylether mit p = 0 und m" = 2 verwendet werden.

4. Zusammensetzung nach einem der Ansprüche 1 bis 3, wobei das Pestizid einen Schmelzpunkt von mindestens 40 °C hat.

5. Zusammensetzung nach einem der Ansprüche 1 bis 4, wobei der Polycarboxylatether frei von vinylaromatischen Monomeren ist.

6. Zusammensetzung nach einem der Ansprüche 1 bis 5, wobei die Zusammensetzung eine wässrige Suspension ist, in der mindestens ein Pestizid in partikulärer Form oder in verkapselter Form vorliegt.

7. Zusammensetzung nach einem der Ansprüche 1 bis 6, wobei die Zusammensetzung eine wässrige Suspension ist, die 0,001 bis 10 Gew.% Polycarboxylatether enthält.

8. Zusammensetzung nach einem der Ansprüche 1 bis 7, wobei die Zusammensetzung eine feste Zusammensetzung ist.

9. Zusammensetzung nach einem der Ansprüche 1 bis 8, wobei die Zusammensetzung eine feste Zusammensetzung ist, die 1,0 bis 5,0 Gew.% Polycarboxylatether enthält.

10. Verfahren zur Herstellung der Zusammensetzung gemäß einem der Ansprüche 1 bis 8 indem man das Pestizid und den Polycarboxylatether in Kontakt bringt.

11. Verwendung des Polycarboxylatethers gemäß einem der Ansprüche 1 bis 8 zur Dispergierung von Pestiziden mit einer Löslichkeit in Wasser von höchstens 10 g/l in wässrigen Zusammensetzungen.

12. Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung gemäß einem der Ansprüche 1 bis 9 auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.

13. Saatgut enthaltend die Zusammensetzung gemäß einem der Ansprüche 1 bis 9.

14. Verfahren zum Beizen von Saatgut, wobei man
(a) das Saatgut mit einem Pestizid mit einer Löslichkeit in Wasser von höchstens 10 g/l und dem Polycarboxylatether gemäß einem der Ansprüche 1 bis 9 behandelt; und
(b) das in Schritt (a) erhaltene Saatgut gegebenenfalls trocknet.

15. Verfahren zur Bekämpfung von unerwünschtem Insekten- oder Milbenbefall auf Pflanzen und/oder zur Bekämpfung von phytopathogenen Pilzen, wobei man Saatgüter von Nutzpflanzen mit einem Pestizid mit einer Löslichkeit in Wasser von höchstens 10 g/l und dem Polycarboxylatether gemäß einem der Ansprüche 1 bis 9 behandelt.
